(19) Europäisches Patentamt
European Patent Office
Office européen des brevets

(11) **EP 2 662 399 B1**

(12) **EUROPÄISCHE PATENTSCHRIFT**

(45) Veröffentlichungstag und Bekanntmachung des Hinweises auf die Patenterteilung:
**16.07.2014   Patentblatt 2014/29**

(51) Int Cl.:
***C08G 75/23*** *(2006.01)*

(21) Anmeldenummer: **12167743.9**

(22) Anmeldetag: **11.05.2012**

(54) **Verfahren zur Herstellung von Polysulfonen**

Method for producing polysulfones

Procédé de fabrication de polysulfones

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.11.2013   Patentblatt 2013/46**

(73) Patentinhaber: **EMS-PATENT AG**
**7013 Domat / Ems (CH)**

(72) Erfinder:
• **Liedloff, Hanns-Jörg**
**7013 Domat/Ems (CH)**

• **Gisler, René**
**7000 Chur (CH)**
• **Kaplan, Andreas**
**7000 Chur (CH)**

(74) Vertreter: **Pfenning, Meinig & Partner GbR**
**Patent- und Rechtsanwälte**
**Theresienhöhe 13**
**80339 München (DE)**

(56) Entgegenhaltungen:
**EP-A2- 0 135 130     EP-A2- 0 410 929**
**WO-A1-2010/112508**

**Beschreibung**

Die vorliegende Erfindung betrifft ein verbessertes Verfahren zur Herstellung von Polysulfonen, insbesondere zur Herstellung von Polyethersulfonen (PESU) und Polyphenylensulfonen (PPSU) wobei das Lösungsmittel N-Methyl-pyr-rolidon (NMP) oder/und N-Ethylpyrrolidon (NEP) ist.

Polysulfone gehören zu den thermoplastischen Hochleistungskunststoffen und finden vielseitige Verwendung in unterschiedlichen Bereichen wie beispielsweise Fahrzeugbau, Medizintechnik, Elektronik, Luftfahrt und Membrantechnologie. Eine Übersicht der Verwendungsmöglichkeiten dieser Polymerklasse bietet der 2008 in Ausgabe 10 auf den Seiten 113 bis 116 der Zeitschrift "Kunstoffe" gedruckte Artikel von N. Inchaurondo-Nehm.

Die seit den 1960er Jahren bekannten Verfahren zu ihrer Herstellung sehen die Umsetzung einer aromatischen Dihydroxyverbindung mit einer Dichlordiarylsulfonkomponente in Gegenwart einer Base vor. Im Laufe der Jahre wurden die Herstellverfahren kontinuierlich weiterentwickelt, als besonders geeignetes Lösungsmittel hat sich NMP erwiesen. Alternativ kann auch NEP und ggf. ein anderes N-alkyliertes Pyrrolidon eingesetzt werden. NMP oder/und NEP erfordern den Einsatz von Kalium-, Natrium- oder Calciumcarbonat als Base. Bevorzugt ist dabei Kaliumcarbonat (Pottasche). Ein besonderer Vorteil der Kombination dieser N-alkylierten Pyrrolidone mit den Carbonaten besteht darin, dass die Umsetzung der aromatischen Dihydroxyverbindung mit der Dichlordiarylsulfonkomponente einstufig erfolgt und der apparatetechnische Aufwand für die Polykondensation vergleichsweise gering gehalten werden kann.

Die EP 0 347 669 A2 beschreibt ein Verfahren zur Herstellung von hochmolekularen, aromatischen Polyethersulfonen aus Diphenolen und Dihalogenarylen, das dadurch gekennzeichnet ist, dass man N-alkylierte Säureamide als Lösungsmittel einsetzt und damit gleichzeitig das bei der Reaktion entstehende Wasser azeotrop entfernt. Diese Schrift lehrt die Verwendung von N-alkylierten Säureamiden selbst als Azeotropbildner.

Zudem beschreibt die CA 847963 A die Verwendung von Sulfoxiden und/oder Sulfonen als Lösungsmittel bei der Herstellung von Polyarylsulfonen.

Die EP 0135 130 A2 beschreibt ein Verfahren zur Herstellung von Polysulfonen durch Polykondensation von im wesentlichen äquivalenten Mengen von 2,2-Bis-(4-oxyphenyl)-propan, das teilweise durch weitere Biphenole ersetzt sein kann, mit Bis-(4-chlorphenyl)-sulfon, das teilweise durch weitere Dihalogenbenzolverbindungen ersetzt sein kann. Als Lösungsmittel wird NMP und als Base Kaliumcarbonat verwendet. Gemäß der Offenbarung dieser Schrift sind Azeotropbildner nicht erforderlich, für Toluol als Schleppmittel wird anhand experimenteller Daten ein negativer Effekt auf die Reaktionsgeschwindigkeit und die Viskositätszahl gezeigt.

Das in der WO 2010/112508 A1 beschriebene Verfahren zur Herstellung von Polybiphenylsulfonpolymeren sieht einen Überschuss der aromatischen Dihydroxyverbindung vor. Als Lösungsmittel findet NMP und als Base Kaliumcarbonat Verwendung. Auch hier wird explizit darauf hingewiesen, dass eine Reaktionsführung ohne zusätzliches Schleppmittel möglich ist, wenn NMP als Lösungsmittel verwendet wird.

Eine Reihe von kommerzialisierten Produkten wie z.B. das PESU Radel A304P oder das PPSU Radel R-5000 NT werden nach Verfahren hergestellt, die einen Überschuss der Dichlorphenylsulfonkomponente, meist Dichlordiphenylsulfon (=DCDPS), verwenden. Das zur Herstellung dieser Produkte DCDPS im Überschuss eingesetzt wurde ergibt sich aus dem mit ca. 0.3 Gewichtsprozent relativ hohen Chlorgehalt dieser Polysulfone und den daraus berechneten Konzentrationen an Chlorphenyl- oder Chlorendgruppen, welche mehr als 80 mmol/kg Polymer betragen. In Übereinstimmung mit dem hohen Anteil an Chlorendgruppen dieser Radel-Typen betragen ihre Hydroxyphenyl- oder Hydroxyendgruppen-Konzentrationen weniger als 20 mmol/kg Polymer. Die Bestimmung dieser phenolischen OH-Gruppen erfolgte nach der von A.J. Wnuk; T.F. Davidson und J.E. McGrawth in Journal of Applied Polymer Science; Applied Polymer Symposium 34; 89-101 (1978) beschriebenen Methode. Wegen der vergleichsweise niedrigen Hydroxyendgruppen-Konzentrationen wird bei den Radel-Typen auf die Alkylierung der Hydroxylgruppen mit Methylchlorid oder anderen Alkylhalogeniden verzichtet. Dies wurde durch $^1$H-NMR-spektroskopische Untersuchungen an Lösungen dieser Polysulfone in $CDCl_3$ (Gerät: 400 MHz-Spektrometer der Fa. Bruker) verifiziert, die Methode wird weiter unten detailliert erläutert.

Im Unterschied zu den Radel A- und -R-Typen wird bei der Herstellung der handelsüblichen PESU- und PPSU-Typen Ultrason E und Ultrason P DCDPS im Unterschuss eingesetzt. Der daraus resultierende Überschuss der zweiwertigen Phenole 4,4'-Dihydroxydiphenylsulfon (Bisphenol S) bzw. 4,4'-Biphenol (4,4'-Dihydroxydiphenyl = DHDP) macht eine Methylierung notwendig, wie die in der folgenden Tabelle aufgeführten Ergebnisse von Endgruppen-Analysen zeigen.

**Tabelle 1*: Endgruppen handelsüblicher Polysulfone.**

| Typ | Polymer | Endgruppenkonzentrationen [mmol/kg] | | | Chlorgehalt [ppm] | Viskositätszahl [ml/g] |
|---|---|---|---|---|---|---|
| | | Chlor-phenyl- | Hydroxyphenyl- | Methoxyphenyl- | | |
| Radel A304P NT | PESU | 90 | 15 | ---- | 3200 | 51 |
| Radel A704P NT | PESU | 106 | 26 | ---- | 3800 | 42 |
| Ultrason E2020P | PESU | 42 | 7 | 72 | 1500 | 56 |
| Radel R 5000 NT | PPSU | 86 | 15 | ---- | 3200 | 71 |
| Ultrason P 3010 | PPSU | 17 | 8 | 112 | 600 | 67 |
| *: Die Bestimmung der Endgruppenkonzentrationen, des Chlorgehalts und der Viskositätszahl erfolgte nach den weiter unten beschriebenen Methoden. | | | | | | |

Der Vorteil der Verfahren, die einen DCDPS-Überschuss vorsehen besteht darin, dass auf einen Reaktionsschritt, nämlich die Alkylierung von Hydroxyphenyl-Endgruppen - gewöhnlich mit Methylchlorid - verzichtet werden kann und dadurch die Material- und Verfahrenskosten reduziert werden können. Ein Nachteil dieser Verfahren besteht in ihrer geringeren Toleranz für Prozessunterbrüche. Konkret besteht der Nachteil darin, dass die salzhaltigen, im Reaktor befindlichen, d.h. noch nicht durch Filtration von den Feststoffen befreiten Polymerlösungen bei verlängerten Verweilzeiten im Reaktor zu Zunahmen der Viskosität und des Molekulargewichts neigen. Bei ausreichend langer Verweildauer im Reaktor entstehen extrem hochviskose Polymere, die für jede der oben beschriebenen Anwendungen völlig unbrauchbar sind, so dass ein nicht mehr kompensierbarer Materialverlust entsteht.

Sowohl die genannten Verfahren aus dem Stand der Technik die einen Überschuss der Hydroxykomponente vorsehen (EP 0 135 130 A2 und WO 2010/112508 A1) als auch Verfahren die einen Chlorüberschuss verwenden weisen folgenden gemeinsamen Nachteil auf:

Die durch den Stand der Technik belegte bevorzugte Durchführung der Polykondensation von Polysulfonen [PESU, PPSU und Polysulfon (auf Basis DCDPS und Bisphenol A)] in Abwesenheit eines Schleppmittels zum Abtrennen des während der Umsetzung entstehenden Wassers hat eine übermässig lange Reaktionsdauer zur Folge, die sich nachteilig auf die Produktivität und Dimensionierung der Polykondensationsreaktoren auswirkt und die Wirtschaftlichkeit des Verfahrens vermindert.

Es war die Aufgabe der vorliegenden Erfindung ein verbessertes Verfahren zur Verfügung zu stellen, welches den erwähnten Nachteil aus dem Stand der Technik überwindet. Diese Aufgabe wird durch ein Herstellungsverfahren mit den Merkmalen von Anspruch 1.

Das erfindungsgemäße Verfahren gemäß Anspruch 1 der vorliegenden Erfindung zur Herstellung von Polysulfonpolymeren umfasst die Umsetzung einer Komponente A bestehend aus zumindest einer aromatischen Dihydroxyverbindung, wobei diese aromatische Dihydroxyverbindung 4,4'-Dihydroxy-biphenyl und/oder Bisphenol S umfasst und einer Komponente B, welche mindestens ein Bis-(halogenaryl)sulfon, bevorzugt 4,4'-Dichlordiphenylsulfon (CAS# 80-07-9) enthält; in einem Molverhältnis von Komponente A zu Komponente B von 0.95 bis 0.99 zu 1.00 oder 1.01 bis 1.05 zu 1.00, wobei die Umsetzung in einem Lösungsmittel umfassend N-alkylierte Pyrrolidone durchgeführt wird und wobei der Reaktionsmischung ein Schleppmittel mit einem Siedepunkt von grösser als 130°C zugesetzt wird. Die Umsetzung der Komponente A mit B erfolgt dabei in Gegenwart einer Base, die während der Reaktion mit dem Gemisch unter Wasserabspaltung reagiert. Die Base aktiviert dabei durch Deprotonierung die Dihydroxyverbindung (Komponente A)

Zum mechanistischen Ablauf der Reaktion besteht die Vorstellung, dass die Base zunächst durch Deprotonierung die Dihydroxyverbindung (Komponente A) aktiviert. Nach Substitution der Chloratome der Dichlorverbindung (Komponente B) durch das Anion von Komponente A entsteht formell Chlorwasserstoff, welcher durch die Base unter Bildung des entsprechenden Salzes und Wasser neutralisiert wird. Beim Einsatz von z.B. Pottasche als Base entstehen dabei Kohlensäure, die in Wasser und Kohlenstoffdioxid zerfällt, und Kaliumchlorid.

Das entstandene Wasser wird dabei in einer bevorzugten Ausführungsform unter Verwendung eines Schleppmittels destillativ aus dem Reaktionsgemisch entfernt. Unter einem Schleppmittel wird dabei bevorzugt ein Stoff verstanden, der mit Wasser ein Azeotrop bildet und es ermöglicht das Wasser aus dem Gemisch herauszuschleppen. Das Schleppmittel ist dabei stofflich vom Lösungsmittel verschieden. Bevorzugt stellt das Schleppmittel kein Lösungsmittel für das hergestellte Polysulfon dar, während das Lösungsmittel keinen Schleppmittelcharakter aufweist.

Vorteilhafte Ausführungsformen dieses Verfahrens werden in den Unteransprüchen 2 bis 16 und der folgenden Beschreibung dargelegt.

Als Resultat der von den Erfindern durchgeführten Untersuchungen wurde festgestellt, dass bei Prozessunterbrüchen nach der Umsetzung der aromatischen Dihydroxyverbindung mit der Dichlorphenylsulfonkomponente kein Anstieg des Molekulargewichts, bis hin zu Polymeren mit unbrauchbaren Eigenschaften beobachtet wird, wenn die aromatische Dihydroxykomponente in einem molaren Überschuss zur Dichlorphenylsulfonkomponente eingesetzt wird.

Bevorzugt werden Schleppmittel auf Basis von Alkylaromaten, insbesondere Alkylbenzolen eingesetzt.

Von den Erfindern wurde festgestellt, dass insbesondere Alkylbenzole, welche einen Siedepunkt von grösser als 130°C besitzen, eine ausgezeichnete Schleppmittelfunktion aufweisen. Sie verkürzen die Reaktionszeiten signifikant und erhöhen somit die Wirtschaftlichkeit des Verfahrens. Angesichts der negativen Ergebnisse aus dem Stand der Technik mit dem einfachsten Alkylbenzol Toluol (Siedepunkt 111°C) sind diese Erkenntnisse äusserst überraschend.

Eine nicht beschränkende Auswahl von Alkylaromaten, gemäß der vorliegenden Erfindung, ist in der folgenden Tabelle zusammen mit ihren Siedetemperaturen aufgeführt.

**Tabelle 2: Auswahl an Schleppmitteln gemäß der vorliegenden Erfindung.**

| Schleppmittel | Siedetemperatur [°C] |
|---|---|
| o-Xylol (1,2-Dimethylbenzol) | 144 |
| m-Xylol (1,3-Dimethylbenzol) | 139 |
| p-Xylol (1,4-Dimethylbenzol) | 138 |
| Ethylbenzol | 136 |
| Mischung aus o-, m- und p-Xylol und Ethylbenzol[*)] | 138.5 |
| Cumol = Isopropylbenzol | 152 |
| Pseudocumol = 1,2,4-Trimethylbenzol | 169 |
| Mesitylen = 1,3,5-Trimethylbenzol | 165 |
| *) *Derartige Mischungen werden aus dem Pyrolysebenzin (aus Steamcracker-Prozessen) oder aus Reformatbenzin (aus Reforming-Prozessen) isoliert und werden im Folgenden als technisches Xylol bezeichnet.* | |

Die Erfindung ermöglicht eine teilweise oder vollständige Entfernung des bei der Umsetzung der Komponente A mit der Komponente B entstehenden Wassers, vorzugsweise durch Abdestillation, vom Reaktionsgemisch und dem darin enthaltenen entstehenden oder entstandenen Polysulfon-polymeren. Das während der Reaktion entstehende Wasser, kann als Azeotrop zusammen mit dem Schleppmittel aus dem Reaktionsgemisch entfernt werden, z.B. durch azeotrope Destillation mit dem Schleppmittel. Dabei ist eine teilweise, bevorzugt vollständige Entfernung des entstandenen Reaktionswassers aus dem Reaktionsgemisch realisierbar.

Unter "vollständiger" Wasserentfernung wird dabei verstanden, dass mehr als 95% des gebildeten Reaktionswassers abgetrennt werden, bevorzugt mehr als 98%. In diesem Zusammenhang wird bei der an dieser Stelle erfolgenden teilweisen oder vollständigen Entfernung des Schleppmittels von "Entwässerung" gesprochen. Für den Fall, dass lediglich ein Teil des Schleppmittels entfernt, beispielsweise abdestilliert wird, kann das restliche bzw. überschüssige Schleppmittel zu einem späteren Zeitpunkt noch aus dem Reaktionsgemisch, beispielsweise ebenso durch Destillation abgetrennt werden.

In einer besonders bevorzugten Ausführungsform wird das Schleppmittel bei der azeotropen Destillation im Kreislauf geführt. Wasser und das Schleppmittel trennen sich im Kondensat und bilden eine Phasengrenze aus, das Wasser kann beispielsweise über einen Wasserabscheider außerhalb des Reaktors, in dem die Umsetzung aus Komponente A und Komponente B durchgeführt wird, erfolgen. Mit dem abgetrennten Wasser wird dabei meist auch ein geringer Teil des Schleppmittels aus dem Reaktionsgemisches abgetrennt.

Komponente A besteht im Sinne der vorliegenden Erfindung aus mindestens einer aromatischen Dihydroxyverbindung und umfasst mindestens 4,4'-Dihydroxybiphenyl und/oder Bisphenol S, wobei 4,4'-Dihydroxybiphenyl bevorzugt ist. Darüberhinaus kann Komponente A weitere Verbindungen, wie z.B. Dihydroxybiphenyle, insbesondere 2,2'-Dihydroxybiphenyl; weitere Bisphenylsulfone, insbesondere Bis(3-hydroxyphenylsulfon); Dihydroxybenzole, insbesondere Hydrochinon und Resorcin; Dihydroxynaphtaline, insbesondere 1,5-Dihydroxynaphthalin, 1,6-Dihydroxynaphthalin und 1,7-Dihydroxy-naphthalin; Bisphenylether, insbesondere Bis(4-hydroxyphenyl)ether und/oder Bis(2-hydroxyphenyl)ether; Bis-phenylsulfide, insbesondere Bis(4-hydroxyphenyl)sulfid; Bisphenylketone, insbesondere Bis(4-hydroxyphenyl)keton; Bisphenylmethane, insbesondere Bis(4-hydroxyphenyl)methan; Bisphenylpropane; insbesondere 2,2-Bis(4-hydroxyphenyl)propan (Bisphenol A); Bisphenylhexafluorpropane, insbesondere 2,2-Bis(3,5-dimethyl-4-hydroxyphenyl)hexafluorpropan; und/oder Mischungen daraus enthalten.

In einer Ausführungsform der vorliegenden Erfindung enthält Komponente A mindestens 50 Gewichtsprozent 4,4'-Dihydroxybiphenyl oder mindestens 50 Gewichtsprozent Bisphenol S, bevorzugt sind mindestens 80 Gewichtsprozent 4,4'-Dihydroxybiphenyl oder Bisphenol S in Komponente A enthalten, in einer besonders bevorzugten Ausführungsform ist Komponente A 4,4'-Dihydroxybiphenyl oder Bisphenol S.

Die eingesetzte Komponente B enthält im Sinne der vorliegenden Erfindung in einer besonders bevorzugten Ausführungsform 4,4'-Dichlordiphenylsulfon, die zusätzliche Verwendung anderer Diarylsulfonverbindungen oder der Ersatz von 4,4'-Dichlordiphenylsulfon durch andere Diarylsulfonverbindungen stehen ebenfalls im Einklang mit der Erfindung.

Die Umsetzung von Komponente A und B erfolgt bevorzugt zwischen 80 und 250°C, weiter bevorzugt zwischen 100 und 220°C und besonders bevorzugt zwischen 150 und 210°C.

Die Umsetzung von Komponente A und B, ausgedrückt durch die Zeitspanne, in der Reaktionswasser entsteht, erfolgt vorzugsweise zwischen 1 und 6 Stunden, bevorzugt zwischen 1,5 und 5 Stunden und besonders bevorzugt zwischen 2 und 4 Stunden.

Gemäß der vorliegenden Erfindung wird die Komponenten A zur Komponente B in einem Molverhältnis von 0.95 bis 0.99 zu 1.00 oder 1.01 bis 1.05 zu 1.00 eingesetzt. Der molare Über- oder Unterschuss der Komponenten beträgt also nicht mehr als 5 % und nicht weniger als 1 %. Bevorzugt liegen diese Über- bzw. Unterschüsse zwischen 1 und 4 %, besonders bevorzugt zwischen 1.5 und 3.5 %. Werden molare Über- bzw. Unterschüsse von mehr als 5 % eingesetzt, werden Produkte mit niedrigem Molekulargewicht erhalten, die aufgrund ihrer ungenügenden mechanischen Eigenschaften nicht für den Einsatz in der Praxis geeignet sind. Der Einsatz von molaren Über- bzw. Unterschüssen von kleiner als 1 % führt hingegen zu Produkten mit sehr hohem Molekulargewicht, die ebenfalls unbrauchbare mechanische Eigenschaften aufweisen.

Besonders bevorzugt ist eine Ausführungsform in der die Komponente A in den oben genannten Überschüssen verwendet wird. Wie bereits erwähnt wird für diese Ausführungsform bei Prozessunterbrüchen kein unkontrollierter Aufbau des Molekulargewichts beobachtet.

Die Menge des Schleppmittels beträgt 4 bis 12 Gewichtsprozent, bevorzugt 5 bis 10 Gewichtsprozent und besonders bevorzugt 6 bis 9 Gewichtsprozent, bezogen auf das Gesamtgewicht aller Komponenten, einschliesslich des Lösungsmittels und der Base.

Durch Reaktionsführung gemäß den Bedingungen des erfindungsgemäßen Verfahrens gelingt es Umsätze von grösser als 96 %, bevorzugt grösser als 98 % und besonders bevorzugt grösser als 98.5 % zu erhalten. Die Umsätze im Sinne der vorliegenden Erfindung beziehen sich auf den molaren Anteil der umgesetzten reaktiven Chlor- und Hydroxyendgruppen der Komponenten A und B.

Die Umsetzung der Komponenten A und B erfolgt bevorzugt in einem Lösungsmittel, welches hauptsächlich N-alkylierte Pyrrolidone umfasst. Besonders bevorzugt ist eine Variante, in der ausschliesslich NMP oder/und NEP als Lösungsmittel eingesetzt wird. Insbesondere bevorzugt ist eine Ausführungsform in der ausschliesslich NMP als Lösungsmittel verwendet wird.

Gemäß der vorliegenden Erfindung beträgt die Konzentration der Komponenten A und B im Lösungsmittel von 10 bis 60 Gewichtsprozent, bevorzugt von 15 bis 50 Gewichtsprozent und besonders bevorzugt von 20 bis 40 Gewichtsprozent.

Schleppmittel im Sinne der vorliegenden Erfindung weisen einen Siedepunkt von grösser als 130°C auf. Bevorzugte Schleppmittel sind ausgewählt aus der Gruppe bestehend aus ortho-Xylol, meta-Xylol, para-Xylol, Mischungen der Xyloisomeren, technisches Xylol, Ethylbenzol, 1,3,5-Trimethylbenzol, 1,2,4-Trimethylbenzol und/oder Mischungen daraus. Besonders bevorzugt ist technisches Xylol, worunter eine z.B. in Reforming- oder Steamcracker-Prozessen anfallende Mischung der Xylolisomeren, die daneben Ethylbenzol enthält verstanden wird. Es sei darauf hingewiesen, dass die Löslichkeit der Polysulfonpolymere sowie der Edukte zu Ihrer Herstellung in den Schleppmitteln sehr gering ist und diese daher im Sinne der vorliegenden Erfindung nicht als Lösungsmittel zu verstehen sind. Außerdem weisen die als Lösungsmittel hervorragend geeigneten N-Alkylpyrrolidone, nur eine ungenügende Schleppmittelfunktion auf und sind im Sinne der vorliegenden Erfindung keinesfalls als Schleppmittel zu verstehen.

In einer bevorzugten Ausführungsform der vorliegenden Erfindung erfolgt die Umsetzung von Komponente A mit Komponente B in Gegenwart einer Base. Diese Base hat den Zweck die aromatische Hydroxykomponente in die reaktivere Phenolatform überzuführen. Bevorzugte Basen sind Alkali- oder Erdalkalihydrogencarbonate, Alkali- oder Erdalkalicarbonate oder Mischungen der zuvor genannten Verbindungen, insbesondere Natriumcarbonat, Kaliumcarbonat und Calciumcarbonat, wobei Kaliumcarbonat besonders bevorzugt ist. In einer besonders bevorzugten Ausführungsform wird wasserfreies Kaliumcarbonat eingesetzt. Gemäß einer weiteren bevorzugten Ausführungsform wird wasserfreies Kaliumcarbonat mit einer Partikelgröße von kleiner als $250\mu$ m eingesetzt. Es werden gemäß der vorliegenden Erfindung 1.0 bis 1.5 Äquivalente der Base, bevorzugt 1.005 bis 1.1 Äquivalente, insbesondere bevorzugt von 1.008 bis 1.05 Äquivalente der Base jeweils bezogen auf 1.0 Äquivalente von Komponente A verwendet.

Obwohl die reinen Polysulfone als sehr oxidationsstabile Verbindungen bekannt sind, gilt - wie die Erfinder festgestellt haben - für die Lösungen dieser Polymere in NMP oder einem anderen Lösungsmittel das genaue Gegenteil. Bereits durch Spuren von Sauerstoff werden die gelösten Polysulfone unter den Herstellungsbedingungen, d.h. bei Temperaturen von ca. 150 bis ca. 240°C; sehr rasch zu völlig unbrauchbaren, d.h. stark verfärbten und tiefviskosen Produkten abgebaut. Die Viskosität oxidativ geschädigter Polysulfone durchläuft zunächst ein Minimum, bevor im Extremfall Vernetzung zu weder fliessfähigen noch aufschmelzbaren Materialien eintritt. Daher ist die Durchführung der Polykondensation und aller Folgeschritte unter einer weitestgehend sauerstofffreien Inertgasatmosphäre zwingend erforderlich. Als Schutzgase haben sich Stickstoff und Argon mit einem Sauerstoffgehalt von weniger als 100 ppm, bevorzugt weniger als 10 ppm, insbesondere weniger als 1 ppm bewährt.

Eine bevorzugte Ausführungsform der vorliegenden Erfindung sieht während und/oder nach der Umsetzung der Komponenten A und B die ein- oder mehrmalige Umsetzung des Polysulfonpolymers mit mindestens einer aliphatischen Monohalogenverbindung (Komponente C) vor. Die noch vorhandenen Hydroxygruppen werden in diesem Reaktionsschritt verethert und das Polymer vor Auf- bzw. Abbaureaktionen geschützt. Außerdem wirkt sich dieser Reaktionsschritt positiv auf die Vergilbungseigenschaften des Polymers aus. Bevorzugt werden Alkylhalogenide und besonders bevorzugt Alkylchloride eingesetzt, d.h. während der Umsetzung mit Komponente C findet eine Alkylierung statt In einer besonders bevorzugten Ausführungsform wird Methylchlorid als Komponente C eingesetzt.

Es ist bevorzugt die Umsetzung mit Komponente C vor dem destillativen Entfernen des überschüssigen Schleppmittels (Schleppmitteldestillation) durchzuführen.

Die Temperatur während der Umsetzung mit Komponente C beträgt gemäß der vorliegenden Erfindung zwischen 140 und 215°C, vorzugsweise zwischen 160 und 205°C, besonders bevorzugt zwischen 180 und 200°C. Komponente C kann kontinuierlich als Gasstrom zugeführt werden, aber auch stossweise aufgepresst werden. Sofern Komponente C in flüssiger Form eingesetzt wird erfolgt vorzugsweise eine kontinuierliche Zugabe. Die Umsetzung mit Komponente C wird zwischen 15 und 200 Minuten, bevorzugt zwischen 25 und 120 Minuten und besonders bevorzugt zwischen 30 und 60 Minuten durchgeführt.

In einer weiteren Ausführungsform der vorliegenden Erfindung werden während und/oder nach der Umsetzung der Komponenten A und B Kettenregler (Komponente D) zugesetzt. Als Komponente D kommen aktivierte aromatische organische Monochlorverbindungen oder einwertige Phenole in Frage. Besonders bevorzugt wird als Komponente D eine Verbindung ausgewählt aus der Gruppe bestehend aus Monochlordiphenylsulfon, 4-Phenylphenol, 2-Hydroxynaphthalin ($\beta$-Naphthol) und/oder 1-Hydroxynaphthalin ($\alpha$-Naphthol) oder Monchlordiphenylsulfon als Einzelsubstanz oder als Gemisch aus mindestens zwei der zuvor genannten Substanzen eingesetzt.

Der Anteil von Komponente D bezogen auf die Summe aus den Komponenten A und B beträgt 0.01 bis 10 Gewichtsprozent, bevorzugt 0.05 bis 3 Gewichtsprozent und insbesondere bevorzugt 0.1 bis 0.75 Gewichtsprozent.

Es hat sich als vorteilhaft erwiesen, dass während der Umsetzung von Komponente A und B entstandene Kaliumchlorid nach beendeter Reaktion abzufiltrieren. Sofern eine Umsetzung mit Komponente C erfolgt, ist es vorteilhaft die Filtration erst nach diesem zweiten Reaktionsschritt durchzuführen. Die Filtration erfolgt nach Verdünnen des Reaktionsgemisches mit dem für die Umsetzung verwendeten Lösungsmittel auf das doppelte Volumen.

Die Prozessdauer liegt im Sinne der vorliegenden Erfindung für alle Polysulfone außer PESU (Bisphenol S als Dihydroxykomponente) unter 400 Minuten, vorzugsweise unter 350 Minuten und besonders bevorzugt unter 310 Minuten. Für PESU ist die Prozessdauer auf Grund der geringeren Reaktionsgeschwindigkeit etwas höher und beträgt unter 450 Minuten, vorzugsweise unter 410 Minuten und insbesondere bevorzugt unter 380 Minuten. Der Begriff Prozessdauer wird im experimentellen Teil erläutert und umfasst neben der Dauer der Umsetzung von Komponente A und B auch die Schritte der Methylierung und der destillativen Entfernung des überschüssigen Schleppmittels.

Die Viskositätzahlen der nach dem Verfahren der vorliegenden Erfindung hergestellten Polysulfone beträgt von 35 bis 85 ml/g, vorzugsweise von 42 bis 80 ml/g und besonders bevorzugt von 45 bis 70 ml/g, gemessen gemäß ISO 307.

Das überschüssige Schleppmittel wird in einer bevorzugten Ausführungsform vor der Ausfällung des Polysulfons entfernt.

Die Ausfällung des erhaltenen Polysulfons kann im Rahmen der vorliegenden Erfindung nach den für diese Stoffklasse üblichen Techniken erfolgen. Das Fällungsmittel wird bevorzugt ausgewählt aus der Gruppe bestehend aus Wasser, Mischungen aus Wasser und NMP, Wasser und NEP und/oder Alkoholen mit 2-4 C-Atomen. Der Anteil des NMP oder NEP in den Mischungen mit Wasser beträgt bis zu 25 Gewichtsprozent. Besonders bevorzugt beträgt die Temperatur des Fällungsmittels 80°C, wenn die Fällung unter Normaldruck erfolgt. Bei höheren Drücken, wie sie durch die Gestaltung des für die Fällung verwendeten Apparats erzwungen werden können, liegt die Temperatur des Fällungsmittels höher als 100°C.

Gegenstand der vorliegenden Erfindung sind ebenso gemäß dem voranstehend beschriebenen Verfahren hergestellte Polysulfonpolymere.

Das erfindungsgemäße Polysulfonpolymer stellt dabei ein Polykondensat aus den Monomeren Komponente A und Komponente B dar, das an den Kettenenden unter anderem mit Gruppierungen, die von Komponente D herrühren, terminiert ist.

Erfindungsgemäß wird ebenso eine thermoplastische Formmasse, enthaltend mindestens ein zuvor genanntes Polysulfonpolymer angegeben. Zudem stellt die Erfindung Formkörper, hergestellt aus einer erfindungsgemäßen thermoplastischen Formmasse, insbesondere in Form von Fasern, Filmen, Membranen oder Schäumen bereit. Die Erfindung betrifft ebenso Verwendungsmöglichkeiten eines erfindungsgemäßen Polysulfonpolymers oder einer erfindungsgemäßen thermoplastischen Formmasse zur Herstellung von Formkörpern, Fasern, Filmen, Membranen oder Schäumen.

Die vorliegende Erfindung wird anhand der folgenden Beispiele, welche die Erfindung illustrieren, aber nicht ihren Umfang einschränken sollen, näher erläutert.

Die in Tabelle 3 aufgeführten Materialien wurden in den Beispielen und Vergleichsbeispielen eingesetzt.

**Tabelle 3:** Eingesetzte Materialien.

| Stoff | Handelsname | Abkürzung | Hersteller |
|---|---|---|---|
| 4,4'-Dihydroxybiphenyl | 4,4'-Biphenol | DHDP | SI-Group; Newport, Tennessee; US |
| 4,4'-Dihydroxydiphenylsulfon | Bisphenol S | BPS | Jiangsu Aolunda High-Tech Ind; Fenshui, CN |
| 4,4'-Dichlordiphenylsulfon | 4,4'-Dichlordiphenylsulfon | DCDPS | Ganesch Polychem. Ltd. Mumbai; India |
| Kaliumcarbonat | Kaliumcarbonat | ---- | EVONIK-Degussa GmbH, Lülsdorf; DE |
| Methylchlorid | Methylchlorid | MeCl | Sigma Aldrich, Buchs, CH |
| N-Methylpyrrolidon | N-Methylpyrrolidon | NMP | BASF AG, Ludwigshafen, DE |
| N-Ethylpyrrolidon | N-Ethylpyrrolidon | NEP | BASF AG, Ludwigshafen, DE |
| technisches Xylol[a] | technisches Xylol[a] | ---- | Total S.A., Courbevois, Paris |
| Toluol | Toluol | ---- | Sigma Aldrich, Buchs, CH |
| *a) Ethylbenzolanteil von <20 %.* | | | |

### Durchführung der analytischen Bestimmungen und Probenvorbereitung

### Probenvorbereitung

Zur Vorbereitung der während oder am Ende der Polykondensationen für die Durchführung der Analysen entnommenen Proben wurden diese mit einem großen Überschuss Wasser bei einer Temperatur von 80°C zunächst gefällt, die resultierenden Polymerpartikel dann zweimal mit der 100-fachen Menge Wasser (2 l auf 20 g Polymer) bei 90°C für 3 Stunden extrahiert, bei 100°C im Vakuumtrockenschrank für 14 Stunden getrocknet und schliesslich für 16 Stunden in einem hohen Überschuss siedenden Methanols (500 ml auf 5 g Polymer) extrahiert und im Vakuum getrocknet.

### Bestimmung der Viskositätszahlen (VZ)

Die Bestimmung der Viskositätszahl in [ml/g] erfolgte gemäß ISO 307 bei 25°C an 1%-igen Lösungen der Polymere in einem 1:1 Gemisch aus Phenol und ortho-Dichlorbenzol. In Beispiel B-2 und Vergleichsbeispiel VB-2 wurde darüber hinaus eine analoge Bestimmung in NMP als Lösungsmittel durchgeführt. Die in NMP gemessenen Viskositätszahlen sind dort in Klammern angegeben.

### Bestimmung der Hydroxyendgruppenkonzentrationen

Die Hydroxyendgruppen wurden gemäß der bereits vorne zitierten Methode von Wnuk et al. bestimmt.

### Bestimmung der Methoxyendgruppenkonzentrationen

Die Methoxyendgruppen wurden mittels $^1$H-NMR-Spektroskopie auf einem 400 MHz-Gerät der Firma Bruker bestimmt. Es wurden die Signale der aromatische Protonen sowie das Signal für die Protonen der Methoxygruppe integriert, wobei die Summe des Integralwerts der aromatischen Protonen auf 16 gesetzt wurde. Die Methoxy-Endgruppen wurden dann anhand der folgenden Formel berechnet:

$$EG(Methoxy) = \frac{Integral(Methoxy) \times 1000000}{M \times 3}$$

mit

EG (*Methoxy*): Methoxy-Endgruppen in $\mu$aeq/g
*Integral* (*Methoxy*): Integral des Signals bei 3.85 ppm (Integral der aromatischen Protonen auf 16gesetzt)
*M*: Gewicht der Wiederhol-Einheit des Polysulfons in g/aeq (PPSU: 400 g/aeq, PESU: 464 g/aeq)

**Bestimmung des Chlorgehaltes**

Der Chlorgehalt wurde mittels Ionenchromatographie bestimmt. Zunächst wurden die Proben wie folgt vorbereitet:

Zur Bestimmung des Gesamtchlorgehalts wurde ein Aufschluss der Probe mit einem Sauerstoff-Aufschluss-Gerät der Fa. IKA durchgeführt. 100 mg der Probe wurden in eine Acetobutyrat-Kapsel eingewogen, mit Zünddraht versehen und mit den beiden Elektroden des Aufschluss-Geräts verbunden. Als Absorptions-Lösung wurden 10 ml 30%-iges Wasserstoffperoxid verwendet. Die Zündung erfolgte unter 30 bar Sauerstoff. Die Aufschluss-Lösung wurde filtriert, in Vials abgefüllt und schliesslich mit Ionenchromatographie auf Chlorid analysiert.

Zur Bestimmung des freien Chlorids wurden 2.0 g Probe in 50 ml Methanol/Wasser 1/1 über Nacht unter Rückfluss extrahiert. Die Extraktions-Lösung wurde filtriert, in Vials abgefüllt und mit Ionenchromatographie auf Chlorid analysiert.

Die Ionenchromatographie wurde mit folgenden Parametern durchgeführt:

Gerät: ICS-90 (Fa. Dionex)
Säule: IonPac A512A Analytical Column (4 x 200 mm)
Eluent: 2.7 mM Natriumcarbonat, 0.3 mM Natriumhydrogencarbonat
Detektion: Leitfähigkeits-Detektor
Fluss: 1 mL/Min.

Die Auswertung erfolgte mit der Methode des externen Standards. Dazu wurde aus 3 verschiedenen Chlorid-Lösungen bekannter Konzentration eine Kalibrierkurve ermittelt.

**Bestimmung der Chlorendgruppenkonzentrationen**

Die Chlorendgruppenkonzentrationen wurden nach der folgenden Formel über den Chlor-Gehalt berechnet:

$$EG(Chlor) = \frac{[Chlorid(gesamt) - Chlorid(frei)]}{35.5}$$

mit

EG (*Chlor*): Chlor-Endgruppen in $\mu$aeq/g
*Chlorid* (*gesamt*): Chlorid-Konzentration der Aufschluss-Lösung in ppm
*Chlorid* (*frei*): Chlorid-Konzentration der Extraktions-Lösung in ppm.

**Beispiel 1 (B-1**, Herstellung von PPSU-1 mit technischem Xylol als Schleppmittel)

In einem beheizbaren Autoklaven der Firma Büchi (Rührgefäß Typ 4, 2.0 l, Büchi AG, Uster) mit Rührer, Anschlüssen für Destillationsaufsätze, Rückflusskühler, Wasserabscheider und Inertgaszuleitung wurden unter Argonatmosphäre 84.82 g (0.4555 mol) 4,4'-Dihydroxybiphenyl und 128.0 g (0.4457 mol) 4,4'-Dichlordiphenylsulfon (Molverhältnis DHDP:DCDPS = 1.022:1.000) in 419 ml NMP gelöst und unter Einwirkung von 63.47 g (0.4587 mol) dispergiertem, besonders feinteiligem Kaliumcarbonat in Gegenwart von 60 g technischem Xylol als Schleppmittel zu einem Polyphenylensulfon umgesetzt, das im Folgenden wie unten beschrieben mit gasförmigem Methylchlorid methyliert wurde. Die Rührerdrehzahl wurde in allen Phasen der Polymerherstellung auf 300 UPM eingestellt. Zunächst wurde das entstehende Wasser während 120 Minuten bei einer Temperatur von 190°C mit Teilen des Schleppmittels aus dem Reaktionsgemisch entfernt. Dieser Vorgang wird im Folgenden als "Entwässerung" bezeichnet. Am Ende dieses Prozessschritts wurde eine für die Messung der Viskositätszahl ausreichende Probe der Polymerlösung abgepresst (Probe 1). Dann wurde der Autoklav verschlossen und innerhalb von 20 Minuten bei 190°C dreimal Methylchlorid aufgepresst, so dass sich jeweils ein Druck von 4 bis 4.5 bar einstellte, dieser Prozessschritt wird im folgenden als "Methylierung" bezeichnet. Am Ende der 1. Methylierung wird eine Probe für die Viskositätsmessung abgepresst (Probe 2). Danach wurde das überschüssige technische Xylol innerhalb von 65 Minuten bei 175-190°C abdestilliert, dieser Prozessschritt wird im Folgenden als "Schleppmitteldestillation" bezeichnet. Schließlich erfolgte eine 2. Methylierung unter den oben angegebenen Bedingungen, diesmal innerhalb von 30 Minuten. Nach Beendigung der 2. Methylierung wird eine weitere Probe entnommen (Probe 3). Die drei Proben wurden nach der oben beschriebenen Prozedur aufbereitet. Die Messung der Viskositätszahl (VZ) jeder der drei Proben ergab folgende Werte.

|  | VZ |
|---|---|
|  | [ml/g] |
| Probe 1: | 64 |
| Probe 2: | 65 |
| Probe 3: | 69 |

Das aus den Chlorphenyl-, Hydroxyphenyl- und Methoxyphenyl-Endgruppenkonzentrationen - insgesamt 142 mmol/kg - berechnete Zahlenmittelmolekulargewicht von Probe 3 betrug 14085 g/mol. Die für die Polymerherstellung insgesamt benötigte Zeit betrug 235 Minuten. Unter dieser Zeit wird sofern im folgenden nicht abweichend definiert die Summe aus den oben genannten Prozessschritten "Entwässerung", "1. Methylierung", "Schleppmitteldestillation" und "2. Methylierung" verstanden, sie wird im Folgenden als Prozessdauer bezeichnet. Bei einigen Beispielen und Vergleichsbeispielen wurden nicht alle 4 Prozessschritte ausgeführt, die Prozessdauer wurde in den jeweiligen Beispielen und Vergleichsbeispielen speziell definiert.

**Vergleichsbeispiel 1a (VB-1a,** Herstellung von PPSU-1 mit Toluol als Schleppmittel)

Auf die gleiche Weise wie unter Beispiel 1 beschrieben, wurden die gleichen Mengen der dort angegebenen Komponenten zu einem Polyphenylensulfon umgesetzt, diesmal aber mit Toluol anstelle des technischen Xylols als Schleppmittel. Die einzelnen Prozessschritte werden unter den folgenden Bedingungen durchgeführt. Nach der Entwässerung und am Ende der 1. und 2. Methylierung wurden Proben entnommen und wie oben beschrieben aufgearbeitet (Proben 1 bis 3).

| Entwässerung: | Dauer: 120 Minuten / Temperatur: 190°C (Probe 1) |
|---|---|
| 1. Methylierung: | Dauer: 25 Minuten /Temperatur: 190°C (Probe 2) |
| Schleppmitteldestillation: | Dauer: 45 Minuten / Temperatur: 175-190°C |
| 2. Methylierung: | Dauer: 25 Minuten /Temperatur- 195°C (Probe 3) |

Die Messung der Viskositätszahl (VZ) nach der oben beschriebenen Methode der drei Proben ergab folgende Werte.

|  | VZ |
|---|---|
|  | [ml/g] |
| Probe 1: | 19 |
| Probe 2: | 21 |
| Probe 3: | 21 |

Das aus den Endgruppenkonzentrationen (Chlorphenyl-, Hydroxyphenyl- und Methoxyphenyl-Endgruppenkonzentrationen) - insgesamt 950 mmol/kg - berechnete Zahlenmittelmolekulargewicht von Probe 3 betrug 2005 g/mol. Dieses Material hat somit allenfalls Oligomercharakter. Die Prozessdauer betrug 215 Minuten.

**Vergleichsbeispiel 1b** (**VB-1b,** Herstellung von PPSU-1 ohne Schleppmittel)

Auf die gleiche Weise wie unter Beispiel 1 beschrieben, wurden die gleichen Mengen der dort angegebenen Komponenten zu einem Polyphenylensulfon umgesetzt, diesmal aber ohne Schleppmittel. Das bei der Polykondensation entstehende Wasser wurde hierbei - wie in Beispiel 8 der WO 2010/112508 A1 beschrieben - innerhalb von 6 Stunden direkt aus dem Reaktor abdestilliert. Der Wasserdampf wurde dabei über eine auf 110-120°C beheizte Leitung zu einem Rückflusskühler mit Wasserabscheider geleitet. Nach der Methylierung wurde eine Probe genommen. Im Unterschied zu B-1 und VB-1a erfolgte hier nur eine Methylierung.

| | |
|---|---|
| Entwässerung: | Dauer: 360 Minuten / Temperatur: 195°C |
| Methylierung: | Dauer: 60 Minuten / Temperatur: 195°C |

Die Bestimmung der Viskositätszahl (VZ) der Probe nach der oben angegebenen Methode ergab folgende Werte.

| | t [min] | VZ [ml/g] |
|---|---|---|
| Probe 1: | 420 (nach Methylierung) | 54 |

Die Viskositätszahl von Beispiel 1 nach der Methylierung wurde hier, trotz der langen Entwässerungszeit, nicht erreicht. Die Prozessdauer (Summe aus der Zeit für die Prozessschritte Entwässerung und Methylierung) betrug 420 Minuten.

**Beispiel 2** (**B-2**, PPSU-2, wie Beispiel 8 von WO 2010/112508 A1, Ansatz aber auf 20 % verkleinert und technisches Xylol als Schleppmittel)

Unter Argonatmosphäre wurden in der unter Beispiel 1 beschriebenen Apparatur 75.79 g (0.4070 mol) 4,4'-Dihydroxybiphenyl und 114.83 g (0.3999 mol) 4,4'-Dichlordiphenylsulfon (Molverhältnis DHDP:DCDPS = 1.018:1.000), in 420 ml NMP gelöst und unter Einwirkung von 57.22 g (0.4140 mol) dispergiertem, besonders feinteiligem Kaliumcarbonat in Gegenwart von 53.5 g technischem Xylol als Schleppmittel zu einem Polyphenylensulfon umgesetzt, das - wie in Beispiel 8 der WO 2010/112508 A1 beschrieben - durch einstündiges Überleiten von Methylchlorid (Fluss: 3 l/h) bei 130°C methyliert wurde. Die Rührerdrehzahl wurde während aller Prozessschritte auf 300 UPM eingestellt. Proben für die Viskositätsmessung wurden vor (Probe 1) und nach der Methylierung (Probe 2) entnommen.

| | |
|---|---|
| Entwässerung: | Dauer: 190 Minuten /Temperatur: 190°C |
| Schleppmitteldestillation: | Dauer: 35 Minuten /Temperatur: 190-200°C |
| Methylierung: | Dauer: 60 Minuten /Temperatur: 130°C |

Die Messung der Viskositätszahl der zwei Proben nach der in der WO 2010/112508 A1 beschriebenen Methode an 1%-igen Lösungen in NMP bei 25°C ergab folgende Werte. Darüber hinaus wurden die Viskositätszahlen in der oben angegeben 1:1 Mischung aus Phenol und ortho-Dichlorbenzolmischung bestimmt.

| | VZ [ml/g] |
|---|---|
| Probe 1: | 65, (60) |
| Probe 2: | 66.5, (60.5) |

Die Prozessdauer (Summe aus der Zeit für die Prozessschritte Entwässerung, Schleppmitteldestillation und Methylierung) betrug 285 Minuten.

**Vergleichsbeispiel 2** (**VB-2,** Herstellung von PPSU-2 ohne Schleppmittel durch Nacharbeitung von Beispiel 8 der WO 2010/112508 A1)

Auf die gleiche Weise wie unter Beispiel 2 beschrieben, wurden die gleichen Mengen der dort angegebenen Komponenten zu einem Polyphenylensulfon umgesetzt, diesmal aber ohne Schleppmittel. Es wurde, wie in der WO 2010/112508 A1 angegeben, für 6 Stunden entwässert. Die Methylierung wurde durch einstündiges Überleiten von Methylchlorid bei 130°C bewerkstelligt. Zur Aufarbeitung wurde die filtrierte PPSU-Lösung nach der Methylierung mit einer 9:1-Mischung aus Wasser und NMP erst gefällt, nach der oben beschriebenen Methode erst mit Wasser und dann mit Methanol extrahiert und im Vakuum getrocknet. Die Messung der Viskositätszahl der Probe nach der in der WO 2010/112508 A1 beschriebenen Methode an 1%-igen Lösungen in NMP bei 25°C und ergab folgende Werte. Darüber hinaus wurden die Viskositätszahlen in der oben angegebenen 1:1 Mischung aus Phenol und ortho-Dichlorbenzol bestimmt.

|  | VZ [ml/g] |
|---|---|
| Probe (nach Methylierung): | 66, (60.5) |

| Entwässerung: | Dauer: 360 Minuten / Temperatur: 190°C |
|---|---|
| Methylierung: | Dauer: 60 Minuten / Temperatur: 130°C |

Die Prozessdauer (Summe aus der Zeit für die Entwässerung und die Methylierung) betrug 420 Minuten. In Beispiel 2 wurde eine vergleichbar hohe Viskositätszahl erreicht, allerdings war die Prozessdauer mit nur 285 Minuten signifikant kleiner.

**Beispiel 3** (**B-3,** Herstellung von PPSU-3; mit technischem Xylol als Schleppmittel und einem molaren Überschuss von DCDPS)

In der unter Beispiel 1 beschriebenen Apparatur wurden unter Argonatmosphäre 127.36 g (0.6840 mol) 4,4'-Dihydroxybiphenyl und 203.13 g (0.7074 mol) 4,4'-Dichlordiphenylsulfon (Molverhältnis DHDP: DCDPS = 0.9669:1.000), in 657 ml NMP gelöst und unter Einwirkung von 98.76 g (0.7146 mol) dispergiertem, besonders feinteiligem Kaliumcarbonat in Gegenwart von 90 g technischem Xylol als Schleppmittel zu einem Polyphenylensulfon umgesetzt. Da es sich bei diesem PPSU um ein stark mit DCDPS-geregeltes Polymer mit entsprechend wenigen Hydroxyphenyl-Endgruppen handelt, wurde auf eine Methylierung verzichtet.

| Entwässerung: | Dauer: 280 Minuten / Temperatur: 190°C |
|---|---|
| Schleppmitteldestillation: | Dauer: 25 Minuten / Temperatur: 190-200°C |

Eine Probe wurde am Ende der Schleppmitteldestillation entnommen und nach den oben beschriebenen Methoden analysiert. Neben der Viskositätszahl wurden auch die Chlorphenyl-Endgruppenkonzentration und die Hydroxyphenyl-Endgruppenkonzentration bestimmt. Eine Probe wurde nach der Schleppmitteldestillation genommen und wie oben beschrieben aufgearbeitet.

|  | VZ [ml/g] | Cl-Phenyl [mmol/kg] | OH-Phenyl [mmol/kg] |
|---|---|---|---|
| Probe: | 59 | 130 | 25 |

Die Prozessdauer (Summe aus der Zeit für die Entwässerung und Schleppmitteidestillation) betrug 305 Minuten.

**Vergleichsbeispiel 3 (VB-3a,** Herstellung von PPSU-3; mit Toluol als Schleppmittel)

Auf die gleiche Weise wie unter Beispiel 3 beschrieben, wurden die gleichen Mengen der dort angegebenen Komponenten zu einem Polyphenylensulfon umgesetzt, diesmal aber mit 90 g Toluol als Schleppmittel. Eine Probe wurde nach der Schleppmitteldestillation genommen und wie oben beschrieben aufgearbeitet.

| Entwässerung: | Dauer: 280 Minuten /Temperatur:190°C |
|---|---|
| Schleppmitteldestillation: | Dauer: 25 Minuten /Temperatur:190-200°C |

Die nach der oben beschriebenen Methode bestimmte Viskositätszahl des Polymers betrug 35 ml/g.
Der Prozessdauer (Summe aus der Zeit für die Entwässerung und die Schleppmitteldestillation) betrug wie bei Beispiel 3 305 Minuten, die Viskositätszahl des Beispiels 3 wurde aber nicht annähernd erreicht.

**Vergleichsbeispiel 3 (VB-3b,** Herstellung von PPSU-3; ohne Schleppmittel)

Auf die gleiche Weise wie unter Beispiel 3 beschrieben, wurden die gleichen Mengen der dort angegebenen Komponenten zu einem Polyphenylensulfon umgesetzt, diesmal aber ohne Schleppmittel. Es wurde, wie in der WO 2010/112508 A1 angegeben, für 6 Stunden entwässert. Zur Aufarbeitung wurde die filtrierte PPSU-Lösung mit einer 9:1-Mischung aus Wasser und NMP erst gefällt, nach der oben beschriebenen Methode erst mit Wasser und dann mit Methanol extrahiert und im Vakuum getrocknet. Die Viskositätszahl wurde nach der oben angegeben Methode in einer 1:1 Mischung aus Phenol und ortho-Dichlorbenzolmischung bestimmt.

|  | VZ [ml/g] |
|---|---|
| Probe (nach Methylierung): | 53, |
| Entwässerung: | Dauer: 360 Minuten / Temperatur: 190°C |

Die Prozessdauer (Zeit für die Entwässerung) betrug 360 Minuten.

Beispiel 4 (B-4, Herstellung von PPSU-1 in NEP anstelle von NMP mit technischem Xylol als Schleppmittel)

Auf die gleiche Weise wie unter Beispiel 1 beschrieben, werden die gleichen Mengen der dort angegebenen Komponenten zu einem Polyphenylensulfon umgesetzt. Als Schleppmittel wurde technisches Xylol und als Lösungsmittel NEP anstelle von NMP verwendet. Die einzelnen Schritte der Polymerherstellung wurden unter den folgenden Bedingungen durchgeführt. Nach der Entwässerung und am Ende der 1. und 2. Methylierung wurden wieder Proben entnommen (Probe 1-3).

| Entwässerung: | Dauer: 180 Minuten / Temperatur: 190°C (Probe 1) |
|---|---|
| 1. Methylierung: | Dauer: 30 Minuten / Temperatur: 190°C (Probe 2) |
| Schleppmitteldestillation: | Dauer: 45 Minuten / Temperatur: 195-205°C |
| 2. Methylierung: | Dauer: 30 Minuten / Temperatur: 195°C (Probe 3) |

Die drei Proben wurden nach der oben beschriebenen Prozedur aufgearbeitet. Die Messung der Viskositätszahl (VZ) gemäß der oben angegebenen Methode ergab folgende Werte.

|  | VZ [ml/g] |
|---|---|
| Probe 1: | 56 |
| Probe 2: | 57 |
| Probe 3: | 58 |

Die Prozessdauer betrug 285 Minuten.

Vergleichsbeispiel 4: (VB-4, Herstellung von PPSU-1 in NEP anstelle von NMP mit Toluol als Schleppmittel)

Auf die gleiche Weise wie unter Beispiel 1 beschrieben, wurden die gleichen Mengen der dort angegebenen Komponenten zu einem Polyphenylensulfon umgesetzt, mit Toluol als Schleppmittel und - wie in Beispiel 4 mit NEP als Lösungsmittel. Die einzelnen Prozessschritte der Polymerherstellung wurden unter den gleichen Bedingungen wie bei Beispiel 4 durchgeführt. Nach der Entwässerung und am Ende der 1, und 2. Methylierung wurden wieder Proben entnommen und wie oben beschrieben aufgearbeitet (Probe 1-3).

| Entwässerung: | Dauer: 180 Minuten / Temperatur: 190°C (Probe 1) |
|---|---|
| 1. Methylierung: | Dauer: 30 Minuten / Temperatur: 190°C (Probe 2) |
| Schleppmitteldestillation: | Dauer: 80 Minuten / Temperatur: 205°C |
| 2. Methylierung: | Dauer: 30 Minuten / Temperatur: 195°C (Probe 3) |

Bemerkenswert ist, dass das Abdestillieren des Toluols aus der Reaktionsmischung vergleichsweise langsam ablief. Um das Schleppmittelgemisch aus Beispiel 4 (technisches Xylol) unter den gleichen Bedingungen destillativ aus dem Reaktor zu entfernen war nur etwa die halbe Zeit nötig.

Die drei Proben wiesen die folgenden nach oben angegebener Methode bestimmten Viskositätszahlen auf:

|  | VZ [ml/g] |
|---|---|
| Probe 1: | 33 |
| Probe 2: | 33 |

(fortgesetzt)

|  | VZ [ml/g] |
|---|---|
| Probe 3: | 35 |

Die Prozessdauer betrug 320 Minuten.

**Beispiel 5:** (**B-5,** Herstellung von PESU in NMP mit technischem Xylol als Schleppmittel)

In der unter Beispiel 1 beschriebenen Apparatur wurden unter Argonatmosphäre 115.27 g (0.46056 mol) 4,4'-Dihydroxydiphenylsulfon und 130.95 g (0.4560 mol) 4,4'-Dichlordiphenylsulfon (Molverhältnis BPS : DCDPS = 1.010 : 1.000) in 495 ml NMP gelöst und unter Einwirkung von 63.66 g (0.4606 mol) dispergiertem, besonders feinteiligem Kaliumcarbonat in Gegenwart von 60 g technischem Xylol als Schleppmittel zu einem Polyethersulfon umgesetzt. An diesem PESU-Typ wurde die Zunahme der Viskosität nach der Entwässerung untersucht, weshalb auf die Methylierung, die zu einem Abbruch oder zu einer deutlichen Verlangsamung der Polykondensation führt, verzichtet wurde. Die Probenentnahme erfolgte 60 Minuten und 150 Minuten nach der Schleppmitteldestillation.

| Entwässerung: | Dauer: 260 Minuten / Temperatur: 190°C |
|---|---|
| Schieppmitteldestillation: | Dauer: 50 Minuten / Temperatur: 185-195°C |

Die beiden wie oben beschrieben aufgearbeiteten Proben wiesen folgende nach oben angegebener Methode bestimmte Viskositätszahlen auf.

|  | VZ [ml/g] |
|---|---|
| Probe 1 (60 min): | 59 |
| Probe 2 (150 min): | 67 |

Bis zur 1. Probenahme betrug die Prozessdauer (Summe aus Entwässerung Schleppmittelkondensation und einer Stunde Wartezeit) 370 Minuten.

**Vergleichsbeispiel 5:** (**VB-5,** Herstellung von PESU in NMP mit Toluol als Schleppmittel)

Auf die gleiche Weise wie unter Beispiel 5 beschrieben, wurden die gleichen Mengen der dort angegebenen Komponenten zu einem Polyethersulfon umgesetzt, diesmal mit Toluol statt mit technischem Xylol als Schleppmittel. 60 Minuten und 150 Minuten nach dem Ende der Schleppmitteldestillation wurden zwei Proben abgepresst an denen die Viskositätszahl nach der oben angegebenen Methode bestimmt wurde. Auf die Analyse einer dritten Probe wurde verzichtet, da visuell keine weitere Viskositätszunahme der sehr dünnflüssigen Reaktionslösung zu erkennen war.

| Entwässerung: | Dauer: 260 Minuten / Temperatur: 190°C |
|---|---|
| Schleppmitteldestillation: | Dauer: 50 Minuten / Temperatur: 185-195°C |

Die beiden Proben wiesen folgende Viskositätszahlen auf:

|  | VZ [ml/g] |
|---|---|
| Probe 1 (60 min): | 33 |
| Probe 2 (150 min): | 37 |

Die Prozessdauer (Summe aus der Zeit für die Prozessschritte Entwässerung und Schleppmitteldestillation, sowie einer Stunde Wartezeit) betrug 370 Minuten.

Tabelle 4: Übersicht der Ergebnisse der Beispiele (B) und Vergleichsbeispiel (VB)

| Eigenschaft | B-1 | VB-1a | VB-1b | B-2 | VB-2 | B-3 | VB-3a | VB-3b | B-4 | VB-4 | B-5 | VB-5 |
|---|---|---|---|---|---|---|---|---|---|---|---|---|
| Polymer | PPSU-1 | PPSU-1 | PPSU-1 | PPSU-2 | PPSU-2 | PPSU-3 | PPSU-3 | PPSU-3 | PPSU-1 | PPSU-1 | PESU | PESU |
| Molverhältnis DHBP:DCDPS | 1.022:1.000 | 1.022:1.000 | 1.022:1.000 | 1.018:1.000 | 1.018:1.000 | 0.9669:1.000 | 0.9669:1.000 | 0.9669:1.000 | 1.022:1.000 | 1.022:1.000 | - | - |
| Molverhältnis BPS:DCDPS | --- | --- | --- | --- | --- | --- | --- | --- | --- | --- | 1.010:1.000 | 1.010:1.000 |
| Lösungsmittel | NMP | NMP | NMP | NMP | NMP | NMP | NMP | NMP | NEP | NEP | NMP | NMP |
| Schleppmittel | Xylol[a] | Toluol | --- | Xylol[a] | --- | Xylol[a] | Toluol | --- | Xylol[a] | Toluol | Xylol[a] | Toluol |
| Entwässerung [min] | 120 | 120 | 360 | 190 | 360 | 280 | 280 | 360 | 180 | 180 | 260 | 260 |
| 1. Methylierung [min] | 20 | 25 | 60 | 60 | 60 | --- | --- | --- | 30 | 30 | --- | --- |
| Schleppmitteldestillation [min] | 65 | 45 | --- | 35 | --- | 25 | 25 | --- | 45 | 80 | 50 | 50 |
| 2. Methylierung [min] | 30 | 25 | --- | --- | --- | --- | --- | --- | 30 | 30 | --- | --- |
| Prozessdauer [min] | 235 | 215 | 420 | 285 | 420 | 305 | 305 | 360 | 285 | 320 | 370[b] | 370[b] |
| Viskositätszahl [ml/g] Probe 1: Probe 2: Probe 3: | 64 65 69 | 19 21 21 | 54 --- --- | 65 (60)[c] 66.5 (60.5)[c] | 66(60.5)[c] --- --- | 59 --- --- | 35 --- --- | 53 --- --- | 56 57 58 | 33 33 35 | 59 67 --- | 33 37 --- |

*a) technisches Xylol; b) bis zur 1. Probenahme (60 Minuten nach Ende der Schleppmitteldestillation); c) Viskositätszahl bestimmt in NMP, alle anderen Viskositätszahlen wurden in einem 1:1 Gemisch aus Phenol/ortho-Dichlorbenzol bestimmt.*

**Patentansprüche**

1. Verfahren zur Herstellung von Polysulfonpolymeren bei dem eine Komponente A, enthaltend zumindest eine aromatische Dihydroxyverbindung ausgewählt aus der Gruppe bestehend aus 4,4'-Dihydroxybiphenyl und/oder Bisphenol S mit einer Komponente B, enthaltend mindestens ein Bis-(halogenaryl)sulfon, bevorzugt 4,4'-Dichlordiphenylsulfon, in Gegenwart einer Base, die mit dem Reatkionsgemisch unter Bildung von Wasser reagiert, umgesetzt wird, wobei
0.95 bis 0.99 oder 1.01 bis 1.05 Äquivalente der Komponente A bezogen auf 1.0 Äquivalente der Komponente B eingesetzt werden,
die Umsetzung in einem Lösungsmittel, umfassend N-alkylierte Pyrrolidone durchgeführt wird, und
diesem Reaktionsgemisch zumindest ein Schleppmittel mit einem Siedepunkt von größer als 130°C zugesetzt wird.

2. Verfahren nach Anspruch 1, **dadurch gekennzeichnet, dass** während und/oder nach der Umsetzung der Komponente A mit Komponente B eine teilweise oder vollständige Entwässerung des dem Reaktionsgemisches erfolgt, vorzugsweise durch Destillation des aus Wasser und dem Schleppmittel gebildeten Azeotrops.

3. Verfahren nach einem der vorhergehenden Ansprüche, wobei das Schleppmittel in einer Menge von 4 bis 12 Gewichtsprozent, bevorzugt 5 bis 10 Gewichtsprozent und besonders bevorzugt 6 bis 9 Gewichtsprozent, bezogen auf das Gesamtgewicht aller Komponenten des Reaktionsgemisches eingesetzt wird.

4. Verfahren nach einem der vorhergehenden Ansprüche, wobei das Schleppmittel mit einem Siedepunkt von grösser als 130°C ausgewählt ist aus der Gruppe bestehend aus Alkylaromaten, bevorzugt Alkylbenzolen, insbesondere ortho-Xylol, meta-Xylol, para-Xylol, Mischungen der Xylolisomere, technischem Xylol, Ethylbenzol, Isopropylbenzol, 1,3,5-Trimethylbenzol; 1,2,4-Trimethylbenzol und/oder Mischungen daraus, wobei technisches Xylol besonders bevorzugt ist.

5. Verfahren nach einem der vorhergehenden Ansprüche, wobei Komponente A im molaren Überschuss eingesetzt wird und der molare Überschuss der Komponente A bezogen auf Komponente B zwischen 1 und 5 %, bevorzugt zwischen 1 und 4 % und besonders bevorzugt zwischen 1.5 und 3 % beträgt.

6. Verfahren nach einem der vorhergehenden Ansprüche, wobei während und/oder nach der Umsetzung der Komponente A und B mindestens einmal eine Komponente C, die eine aliphatische Monochlorverbindung, bevorzugt Methylchlorid ist, zum Reaktionsgemisch zugeben und umgesetzt wird (Alkylierung).

7. Verfahren nach einem der vorhergehenden Ansprüche, wobei während und/oder nach der Umsetzung von Komponente A und B eine Umsetzung mit einer Komponente D, die eine aromatische organische Halogenverbindung oder ein einwertiges Phenol ist erfolgt, wobei die Komponente D bevorzugt ausgewählt ist aus der Gruppe bestehend aus 4-Phenylphenol, 1-Hydroxynaphtalin und/oder 2-Hydroxynapthalin oder die Komponente D Monochlordiphenylsulfon ist.

8. Verfahren nach einem der beiden vorhergehenden Ansprüche, **dadurch gekennzeichnet, dass** vor der Zugabe und Umsetzung der Komponente C und/oder der Komponente D zumindest ein Teil oder die Gesamtheit des gebildeten Wassers aus dem Reaktionsgemisch entfernt wird (Entwässerung) und/oder nach der Umsetzung der Komponente C und/oder der Komponente D eine vollständige Entfernung des Schleppmittels aus dem Reaktionsgemisch erfolgt (Schleppmitteldestillation).

9. Verfahren nach einem der vorhergehenden Ansprüche, wobei die Base ausgewählt ist aus der Gruppe bestehend aus Alkali- oder Erdalkalihydrogencarbonaten, Alkali- oder Erdalkalicarbonaten oder Mischungen der zuvor genannten Verbindungen, insbesondere Natriumcarbonat, Kaliumcarbonat und/oder Calciumcarbonat.

10. Verfahren nach vorhergehendem Anspruch, wobei 1.0 bis 1.5 Äquivalente der Base, bevorzugt 1.005 bis 1.1 Äquivalente der Base und insbesondere bevorzugt 1.008 bis 1.05 Äquivalente der Base bezogen auf 1.0 Äquivalente von Komponente A verwendet werden.

11. Verfahren nach einem der vorhergehenden Ansprüche, wobei die Umsetzung von Komponente A mit Komponente B unter einer Inertgasatmosphäre, bevorzugt ausgewählt aus der Gruppe bestehend aus einer Argon- und/oder einer Stickstoffatmosphäre, die weniger als 100 ppm, vorzugsweise weniger als 10 ppm, insbesondere weniger als 1 ppm Sauerstoff enthält, durchgeführt wird.

**12.** Verfahren nach einem der vorhergehenden Ansprüche, wobei die Summe aus 4,4'-Dihydroxybiphenyl und/oder Bisphenol S mindestens 50 Gewichtsprozent der Komponente A ausmacht.

**13.** Verfahren nach einem der vorhergehenden Ansprüche, wobei Komponente A 4,4'-Dihydroxybiphenyl ist.

**14.** Verfahren nach einem der Ansprüche 1 bis 12, wobei Komponente A 4,4'-Bisphenol S ist.

**15.** Verfahren nach einem der Ansprüche 1 bis 13, wobei die Prozessdauer, worunter die Gesamtdauer für die Schritte Entwässerung, Schleppmitteldestillation und Alkylierung verstanden wird, unter 400 Minuten, vorzugsweise unter 350 Minuten und besonders bevorzugt unter 310 Minuten liegt, wobei bevorzugt die alleinige Verwendung von Bisphenol S als Komponente A, ausgeschlossen ist.

**16.** Verfahren nach einem der Ansprüche 1 bis 12 und 14, wobei die Prozessdauer, worunter die Gesamtdauer für die Schritte Entwässerung, Schleppmitteldestillation und Alkylierung verstanden wird, unter 450 Minuten, vorzugsweise unter 410 Minuten und besonders bevorzugt unter 380 Minuten liegt.

**Claims**

**1.** A method for the production of polysulfone polymers in which a component A, containing at least one aromatic dihydroxy compound selected from the group consisting of 4,4'-dihydroxybiphenyl and/or bisphenol S is reacted with a component B, containing at least one bis-(haloaryl) sulfone, preferably 4,4'-dichlorodiphenyl sulfone, in the presence of a base, which reacts with the reaction mixture with the formation of water, wherein
0.95 to 0.99 or 1.01 to 1.05 equivalents of component A based on 1.0 equivalents of component B are employed, the reaction is carried out in a solvent comprising N-alkylated pyrrolidones, and
at least one entrainer with a boiling point greater than 130°C is added to this reaction mixture.

**2.** The method according to claim 1, **characterised in that** during and/or after the reaction of component A with component B a partial or complete dehydration of the to the reaction mixture takes place, preferably by distillation of the azeotrope formed from water and the entrainer.

**3.** The method according to one of the preceding claims, wherein the entrainer is employed in a quantity of 4 to 12 weight per cent, preferably 5 to 10 weight per cent and particularly preferably 6 to 9 weight per cent, based on the total weight of all components of the reaction mixture.

**4.** The method according to one of the preceding claims, wherein the entrainer with a boiling point greater than 130°C is selected from the group consisting of alkylaromatics, preferably alkylbenzenes, in particular ortho-xylene meta-xylene, para-xylene, mixtures of the xylene
isomers, technical xylene, ethylbenzene, isopropylbenzene, 1,3,5-trimethylbenzene; 1,2,4-trimethylbenzene and/or mixtures thereof, wherein technical xylene is particularly preferred.

**5.** The method according to one of the preceding claims, wherein component A is employed in a molar excess and the molar excess of component A based on component B is between 1 and 5 %, preferably between 1 and 4 % and particularly preferably between 1.5 and 3 %.

**6.** The method according to one of the preceding claims, wherein, during and/or after the reaction of component A and B, at least once, a component C, which is an aliphatic monochloro compound, preferably methyl chloride, is added to the reaction mixture and reacted (alkylation).

**7.** The method according to one of the preceding claims, wherein, during and/or after the reaction of component A and B, a reaction takes place with a component D, which is an aromatic organic halogen compound or a monohydric phenol, wherein component D is preferably selected from the group consisting of 4-phenylphenol, 1-hydroxynaphthalene and/or 2-hydroxynapthalene or component D is monochlorodiphenyl sulfone.

**8.** The method according to one of the two preceding claims, **characterised in that**, before the addition and reaction of component C and/or component D, at least a part or the entirety of the water that has formed is removed from the reaction mixture (dehydration) and/or after the reaction of component C and/or component D a complete removal of the entrainer from the reaction mixture takes place (entrainer distillation).

9. The method according to one of the preceding claims, wherein the base is selected from the group consisting of alkali or alkaline earth hydrogen carbonates, alkali or alkaline earth carbonates or mixtures of the aforementioned compounds, in particular sodium carbonate, potassium carbonate and/or calcium carbonate.

10. The method according to the preceding claim, wherein 1.0 to 1.5 equivalents of the base, preferably 1.005 to 1.1 equivalents of the base and particularly preferably 1.008 to 1.05 equivalents of the base are used, based on 1.0 equivalents of component A.

11. The method according to one of the preceding claims, wherein the reaction of component A with component B is carried out under an inert gas atmosphere, preferably selected from the group consisting of an argon and/or nitrogen atmosphere, which contains less than 100 ppm, preferably less than 10 ppm, in particular less than 1 ppm oxygen.

12. The method according to one of the preceding claims, wherein the sum of 4,4'-dihydroxybiphenyl and/or bisphenol S amounts to at least 50 weight per cent of component A.

13. The method according to one of the preceding claims, wherein component A is 4,4'-dihydroxybiphenyl.

14. The method according to one of claims 1 to 12, wherein component A is 4,4'-bisphenol S.

15. The method according to one of claims 1 to 13, wherein the duration of the process, which is understood to be the total duration of the steps of dehydration, entrainer distillation and alkylation, is less than 400 minutes, preferably less than 350 minutes and particularly preferably less than 310 minutes, wherein the sole use of bisphenol S as component A is preferably excluded.

16. The method according to one of claims 1 to 12 and 14, wherein the duration of the process, which is understood to be the total duration of the steps of dehydration, entrainer distillation and alkylation, is less than 450 minutes, preferably less than 410 minutes and particularly preferably less than 380 minutes.

**Revendications**

1. Procédé de production de polymères de polysulfone dans lequel on fait réagir un composant A contenant au moins un composé dihydroxy aromatique choisi dans le groupe comprenant le 4,4'-dihydroxybiphényle et/ou le bisphénol S avec un composant B, contenant au moins une bis-(halogéno-aryl)sulfone, de préférence, la 4,4'-dichlorodiphénylsulfone, en présence d'une base qui réagit avec le mélange réactionnel en formant de l'eau, dans lequel on utilise 0,95 à 0,99 ou 1,01 à 1,05 équivalents du composant A par rapport à 1,0 équivalent du composant B, la réaction est réalisée dans un solvant comprenant de la pyrrolidone N-alkylée, et on ajoute à ce mélange réactionnel au moins un agent d'entraînement présentant un point d'ébullition supérieur à 130° C.

2. Procédé selon la revendication 1, **caractérisé en ce que** pendant et/ou après la réaction du composant A avec le composant B, une déshydratation partielle ou complète du mélange réactionnel s'effectue, de préférence par distillation de l'azéotrope formé par distillation de l'eau et de l'agent d'entraînement.

3. Procédé selon l'une des revendications précédentes, dans lequel l'agent d'entraînement est utilisé en une quantité de 4 à 12 % en poids, de préférence de 5 à 10 % en poids et de manière particulièrement préférée, de 6 à 9 % en poids, par rapport au poids total de tous les composants du mélange réactionnel.

4. Procédé selon l'une des réactions précédentes, dans lequel l'agent d'entraînement présentant un point d'ébullition supérieur à 130° C est choisi dans le groupe comprenant des agents alkyl-aromatiques, de préférence, des alkylbenzènes, en particulier, l'ortho-xylène, le méta-xylène, le para-xylène, des mélanges d'isomères de xylène, le xylène technique, l'éthylbenzène, l'isopropylbenzène, le 1,3,5-triméthylbenzène ; le 1,2,4-triméthylbenzène et/ou des mélanges de ceux-ci, dans lequel le xylène technique est particulièrement préféré.

5. Procédé selon l'une des revendications précédentes, dans lequel on utilise un composant A en excédent molaire et l'excédent molaire du composant A par rapport au composant B se situe entre 1 et 5 %, de préférence entre 1 et 4 % et de manière particulièrement préférée, entre 1,5 et 3 %.

**6.** Procédé selon l'une des revendications précédentes, dans lequel pendant et/ou après la réaction des composants A et B, on ajoute au mélange réactionnel, au moins une fois, un composant C qui est un composé aliphatique monochloré, de préférence, le chlorure de méthyle, et on le fait réagir (alkylation).

**7.** Procédé selon l'une des revendications précédentes, dans lequel pendant et/ou après la réaction des composants A et B, une réaction s'effectue avec un composants D qui est un composé halogéné organique aromatique ou un phénol monovalent, dans lequel le composant D est choisi de préférence dans le groupe comprenant le 4-phénylphénol, la 1-hydroxynaphtaline et/ou la 2-hydroxynaphtaline ou le composant D est la monochlorodiphénylsulfone.

**8.** Procédé selon l'une des deux revendications précédentes, **caractérisé en ce qu'**avant l'addition et la réaction du composant C et/ou du composant D, au moins une partie ou la totalité de l'eau formée du mélange réactionnel est éliminée (déshydratation) et/ou après la réaction du composant C et/ou du composant D, une élimination complète de l'agent d'entraînement du mélange réactionnel s'effectue (distillation de l'agent d'entraînement).

**9.** Procédé selon l'une des revendications précédentes, dans lequel la base est choisie dans le groupe comprenant des hydrogénocarbonates alcalins ou alcalinoterreux, des carbonates alcalins ou alcalinoterreux ou des mélanges des
composés mentionnés précédemment, en particulier le carbonate de sodium, le carbonate de potassium et/ou le carbonate de calcium.

**10.** Procédé selon la revendication précédente, dans lequel on utilise 1,0 à 1,5 équivalents de la base, de préférence 1,005 à 1,1 équivalent de la base et de manière particulièrement préférée, 1,008 à 1,05 équivalents de la base par rapport à 1,0 équivalent du composant A.

**11.** Procédé selon l'une des revendications précédentes, dans lequel la réaction du composant A avec le composant B est réalisée sous une atmosphère de gaz inerte, de préférence choisie dans le groupe comprenant une atmosphère d'argon et/ou d'azote qui contient moins de 100 ppm, de préférence, moins de 10 ppm, en particulier, moins de 1 ppm d'oxygène.

**12.** Procédé selon l'une des revendications précédentes, dans lequel le total du 4,4'-dihydroxybiphényle et/ou du bisphénol S constitue au moins 50 % en poids du composant A.

**13.** Procédé selon l'une des revendications précédentes, dans lequel le composant A est le 4,4'-dihydroxybiphényle.

**14.** Procédé selon l'une des revendications 1 à 12, dans lequel le composant A est le 4,4'-bisphénol S.

**15.** Procédé selon l'une des revendications 1 à 13, dans lequel la durée du processus sous laquelle on entend la durée totale pour les étapes de déshydratation, de distillation de l'agent d'entraînement et d'alkylation, est inférieure à 400 minutes, de préférence inférieure à 350 minutes et de manière particulièrement préférée, inférieure à 310 minutes, dans lequel de préférence l'utilisation seule du bisphénol S comme composant A est exclue.

**16.** Procédé selon l'une des revendications 1 à 12 et 14, dans lequel la durée de processus, sous laquelle on entend la durée totale pour les étapes de déshydratation, de distillation de l'agent d'entraînement et d'alkylation, est inférieure à 450 minutes, de préférence inférieure à 410 minutes et de manière particulièrement préférée, inférieure à 380 minutes.

**IN DER BESCHREIBUNG AUFGEFÜHRTE DOKUMENTE**

**In der Beschreibung aufgeführte Patentdokumente**

- EP 0347669 A2
- CA 847963 A
- EP 0135130 A2

- WO 2010112508 A1

**In der Beschreibung aufgeführte Nicht-Patentliteratur**

- **A.J. WNUK ; T.F. DAVIDSON ; J.E. MCGRAWTH.** *Journal of Applied Polymer Science; Applied Polymer Symposium,* 1978, vol. 34, 89-101